Europäisches Patentamt

European Patent Office

Office européen des brevets

(19)

(11) Numéro de publication : **0 318 370 B1**

# (12) FASCICULE DE BREVET EUROPEEN

(45) Date de publication du fascicule du brevet :
**11.09.91 Bulletin 91/37**

(51) Int. Cl.$^5$ : **G01B 5/06, C13F 1/10, B04B 11/04**

(21) Numéro de dépôt : **88402924.0**

(22) Date de dépôt : **22.11.88**

(54) **Procédé de mesure de l'épaisseur d'un dépôt solide sur les parois d'une centrifugeuse, les moyens pour sa mise en oeuvre et leur application particulière en sucrerie.**

(30) Priorité : **23.11.87 FR 8716185**

(43) Date de publication de la demande :
**31.05.89 Bulletin 89/22**

(45) Mention de la délivrance du brevet :
**11.09.91 Bulletin 91/37**

(84) Etats contractants désignés :
**BE DE ES FR GB IT NL SE**

(56) Documents cités :
**FR-A- 895 585**
**FR-A- 2 458 320**
**FR-A- 2 510 429**

(56) Documents cités :
**GB-A- 1 540 897**
**PATENT ABSTRACTS OF JAPAN, vol. 10, no. 322 (P-511)[2378], 31 octobre 1986; & JP-A-61 129 502 (BABCOCK HITACHI K.K.) 17-06-1986**

(73) Titulaire : **COMPAGNIE FRANCAISE DE SUCRERIE**
**336, rue Saint-Honoré**
**F-75001 Paris (FR)**

(72) Inventeur : **Leconte, Denis**
**15, Route de Soissons Bucy-le-Long**
**F-02200 Soissons (FR)**

(74) Mandataire : **Rinuy, Santarelli**
**14, avenue de la Grande Armée**
**F-75017 Paris (FR)**

## Description

La présente invention concerne un procédé de mesure de l'épaisseur d'un dépôt solide sur les parois d'une centrifugeuse à un moment quelconque de son cycle, les moyens pour sa mise en oeuvre et leur application particulière en sucrerie.

On rappellera qu'une essoreuse ou centrifugeuse est un appareil destiné à séparer les parcelles solides de la partie liquide d'une solution hétérogène dans laquelle ces deux constituants sont intimement réunis.

Cet appareil utilise la force centrifuge pour accélérer la filtration du milieu sur une toile filtrante apte à retenir la partie solide.

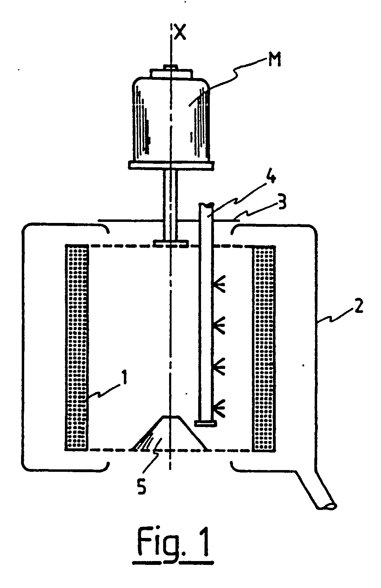

Une centrifugeuse type (voir par exemple la figure 1 des dessins annexés) comporte un panier cylindrique 1 portant la toile filtrante ; l'axe de ce panier est solidaire d'un moteur M capable de le faire tourner à grande vitesse. Le panier est entouré d'une paroi cylindrique fixe ou "jupe" 2 destinée recevoir la partie liquide. Un couvercle 3 supporte divers accessoires tels que :

— conduit d'arrivée du mélange à essorer,

— rampe de clairçage 4 (dans le domaine de la sucrerie),

— couteau de déchargement...

Un cône 5 sert à répartir uniformément la masse à filtrer sur la toile filtrante au cours de la période d'introduction.

Pendant la centrifugation, la matière introduite et en cours de séparation se retrouve plaquée sur la paroi interne du panier 1 et forme un cylindre creux de matière plus ou moins tassée, suivant le moment considéré.

Il serait intéressant de connaître l'épaisseur "e" de ce cylindre quand on le désire, mais elle est difficile à déterminer puisqu'elle se situe à l'intérieur d'un système fermé et que ce système tourne à grande vitesse.

Le brevet anglais n° 1540897 décrit un filtre centrifuge comprenant un levier-tâteur connecté par son arbre de transmission à un servo-mécanisme commandé par les mouvements rotatifs de l'arbre de transmission et qui entraine le tâteur à la surface suivant les variations de la couche, l'arbre de transmission étant couplé à un transmetteur de position fournissant un signal correspondant à l'épaisseur de la couche, à fins de contrôle, régulation et commande.

Le brevet français n° 2458320 décrit un contrôleur de chargement mécaniquement relié à une rampe de lavage. Ce contrôleur donne un simple contact lorsqu'une épaisseur prédéterminée est atteinte.

Le brevet français n° 2510429 décrit un dispositif de régulation sans contact des niveaux de remplissage du tambour d'une centrifugeuse à filtre, basé sur la mesure de pression différentielle d'un organe déprimogène approché de la couche à régler. Ce dispositif émet un signal lorsqu'une épaisseur prédéterminée est atteinte.

La présente invention a justement pour objet de déterminer cette épaisseur "e" de la couche déposée.

Le procédé de l'invention consiste, au cours de la rotation du panier de la centrifugeuse à appliquer en permanence ou non à la surface de la couche des solides se déposant sur la paroi interne de ce panier en rotation un palpeur monté à l'extrémité d'un bras disposé perpendiculairement à un arbre situé à l'intérieur du panier de la centrifugeuse dont la direction est parallèle à celle de l'axe de rotation dudit panier ; à mesurer en permanence ou non la valeur de l'angle compris entre la position occupée par ledit bras à un moment ou une période donné (e) en cours de rotation et une position préalablement fixée comme position de référence et à déterminer l'épaisseur "e" de ladite couche des solides déposés.

Dans des conditions préférentielles de mise en oeuvre du procédé ci-dessus décrit, l'épaisseur "e" est calculée suivant la relation :

$$e = R - \sqrt{b^2 + c^2 - 2bc \cos(\alpha + \alpha_0)}$$

où R est le rayon du cylindre-panier, $\underline{b}$ est la distance entre la position du palpeur et l'arbre auquel le bras portant ledit palpeur est relié, $\underline{c}$ est la distance entre l'axe longitudinal du cylindre-panier et ledit arbre qui lui est parallèle et $\alpha_0$ est l'angle que fait le bras portant le palpeur dans sa position de référence avec la position qu'il aurait si sa direction coupait l'axe de rotation du panier.

L'invention couvre également les moyens pour la mise en oeuvre de ce procédé ces moyens étant essentiellement caractérisés par l'association d'un palpeur et d'un appareillage transmetteur de mesure d'angle, le palpeur comprenant un arbre (6) unique destiné à être monté à l'intérieur du cylindre-panier unique (1) de la centrifugeuse et parallèlement à l'axe de rotation de celui-ci et portant à l'une de ses extrémités, perpendiculairement à lui-même, un bras (10) se terminant par un système palpeur (9) et, à l'autre extrémité, des systèmes (8) propres à maintenir ledit palpeur au contact de la surface sur laquelle il doit s'appuyer ou à rappeler ledit système palpeur vers une position de référence fixe donnée, ledit palpeur étant associé à au moins un système de détermination de la valeur de l'angle (7) compris entre ladite position de référence (P₀) et la position de travail (P) dudit système palpeur.

Suivant d'autres caractéristiques, ledit système palpeur est constitué par une surface courbe ne présentant aucune aspérité.

Suivant un mode de réalisation avantageux, l'arbre (6) porteur du bras (10) et de son système palpeur (9) est pourvu à son extrémité supérieure faisant saillie à l'extérieur du couvercle (3) de la centrifugeuse, d'un système (7) de mesure, transmetteur de champ par exemple, de la valeur de l'angle formé, éventuellement relié à un système calculateur chargé de résoudre automatiquement la relation rappelée ci-dessus et donnant, par affichage ou lecture directe, la valeur de l'épaisseur recherchée.

D'autres moyens préférés de mise en oeuvre de l'invention ci-dessus décrite permettent l'établissement du bilan matière d'une centrifugeuse discontinue ou le réglage automatique d'actions, séquentielles ou non, dépendant de l'épaisseur "e" mesurée à un instant donné ou pendant une période du cycle de la centrifugeuse.

D'autres caractéristiques et les avantages de l'invention ressortiront plus clairement de la description qui va suivre, faite en regard des dessins annexés sur lesquels :

— la figure 1 représente, comme déjà rappelé ci-dessus, le schéma d'une centrifugeuse de type classique;

— la figure 2 représente la même centrifugeuse munie des moyens selon l'invention pour la mise en oeuvre du procédé en cause, la figure 2a étant une représentation en plan illustrant la formation de l'angle α en fonction de l'épaisseur "e" d'une couche en cours de dépôt pendant la rotation du cylindre-panier et

— la figure 3 est une représentation, à plus grande échelle donnant la manière dont la relation ci-dessus peut être résolue sur la base d'un raisonnement fondé sur la géométrie du système.

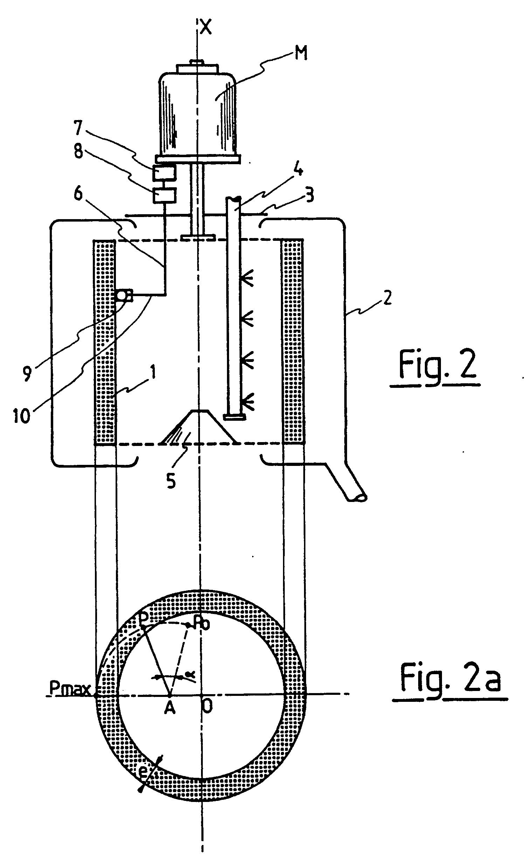

En se référant à ces figures, les éléments principaux constitutifs d'une centrifugeuse ont été précédemment rappelés dans le préambule de la présente description et ces éléments ne seront pas repris ici, les numéros de référence étant reportés sur la figure 2.

Sur cette figure, on a représenté ladite centrifugeuse illustrée à la figure 1 et le système pour la mise en oeuvre du procédé selon l'invention et qui est constitué par l'arbre 6, celui-ci étant parallèle à l'axe longitudinal X-Y de la centrifugeuse ; cet arbre est monté par tout moyen approprié et son extrémité supérieure traverse le couvercle 3 de cette centrifugeuse et comporte un dispositif connu dit "mesureur d'angle" 7 ainsi qu'un système dit "actionneur" 8 du palpeur dont il sera question ci-après et qui est destiné à solliciter ledit palpeur pour le maintenir au contact de la surface de la couche des solides en cours de dépôt de manière continue ou non.

Le palpeur en question 9 est porté à l'extrémité d'un bras 10 monté perpendiculairement à l'arbre 6 et à l'extrémité de ce dernier. Ce palpeur, suivant une forme de réalisation avantageuse, pourra être constitué par un volume présentant une surface courbe sans aspérités, de manière à pouvoir suivre à tout moment la surface du solide sur lequel il doit prendre appui, que cette surface soit elle-même constituée par la paroi interne du cylindre-panier 1 ou que cette surface soit celle des solides déposés et se trouvant alors séparés de cette paroi interne d'une distance "e" qui représente alors l'épaisseur du dépôt recherchée.

Conformément à l'invention et en se référant à la figure 2a, l'angle α déterminé par le mesureur d'angle 7 et formé entre les deux positions P₀ et P du bras 10 (P₀ étant la position prise comme position de référence et P étant la position en cours de mesure) va pouvoir être exploité soit graphiquement, soit au moyen d'un calculateur (non représenté).

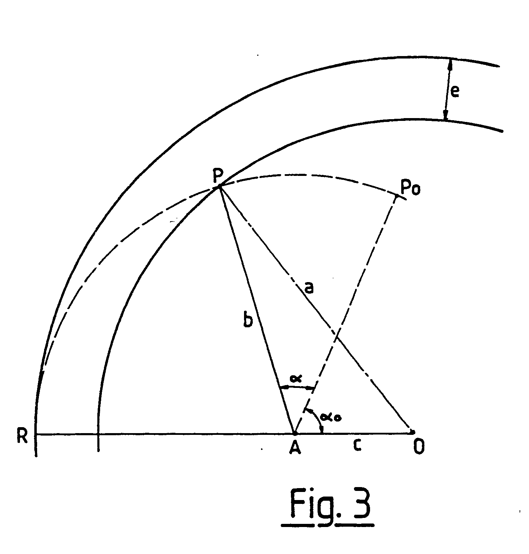

C'est ainsi que connaissant la valeur de cet angle α, on en déduit l'épaisseur recherchée "e" (voir figure 3). En appliquant en effet la formule des triangles quelconques, on obtient la distance "a" en fonction des distances connues b et c de l'angle α₀ mesuré.

La différence R − a donne l'épaisseur cherchée suivant la relation :

$$e = R - \sqrt{b^2 + c^2 - 2bc \cos(\alpha + \alpha_o)}$$

Dans le cas particulier de l'application de l'invention dans le domaine de la sucrerie, on peut faire remarquer que connaissant l'épaisseur d'une couche "e" essorée, il est facile de trouver le volume de cette couche. On trouve :

$$V = \pi h e (D - e)$$

où h et D sont respectivement la hauteur et le diamètre du panier de l'essoreuse.

Si on connait la masse spécifique "d" de la couche essorée, on en déduit la masse contenue dans le panier:

3

$$P = V \cdot d$$

Si on connait la masse de matière introduite dans la centrifugeuse, on peut calculer le rendement de l'opération d'essorage immédiatement puisqu'on aura le résultat alors que le sucre sera encore dans l'appareil.

En sucrerie, un cycle d'essorage comporte une opération dite de clairçage par laquelle, en fin d'essorage, on injecte de l'eau et/ou de la vapeur sur le sucre essoré.

Ces clairçages ont pour but de nettoyer le sucre en le débarrassant de l'eau-mère résiduelle. Ils ont l'inconvénient de solubiliser une partie du sucre cristallisé.

On appelle "freinte" "F" la quantité de sucre ainsi redissoute par les clairçages, rapportée à la quantité de sucre avant clairçages :

$$F = \frac{Se - Ss}{Se}$$

où Se = quantité de sucre entré,
et Ss = quantité de sucre sorti.

Puisqu'on dispose ainsi d'un moyen permettant de connaitre le volume du sucre contenu dans le panier en cours d'essorage, il suffira de déterminer les volumes immédiatement avant et immédiatement après les clairçages pour en déduire la freinte.

En fait, le calcul montre qu'il suffit de connaitre les épaisseurs $e_1$ et $e_2$ avant et après clairçages pour déterminer la freinte "F" :

$$F = 1 - \frac{e_2 \, (D - e_2)}{e_1 \, (D - e_1)}$$

où D = diamètre du panier de l'essoreuse.

Il en résulte, toujours dans le domaine des sucreries, que le bilan d'un atelier de cristallisation est plus simple à réaliser que par la méthode classique. En effet, on évalue habituellement ce bilan de façon indirecte à partir du pourcentage de matière sèches (Brix) de la masse cuite mise à essorer et des puretés de cette masse cuite et de l'égoût résiduel.

Le rendement est alors calculé en appliquant une formule comme, par exemple :

$$Rdt = Bmc \, \frac{Pmc - Pe}{100 - Pe}$$

où Bmc est le pourcentage de matières sèches de la masse cuite,
Pmc est la pureté de la masse cuite,
Pe est la pureté de l'égoût.

Il est bien évident que, connaissant directement la quantité de sucre contenue dans l'essoreuse, il suffit de connaitre la quantité de masse cuite travaillée pour avoir le rendement.

Un tel bilan peut être complètement automatisé en indiquant à l'ordinateur, outre l'angle $\alpha$ mesuré, le volume de la masse cuite introduite.

Il en résulte également que l'on peut procéder au réglage de la quantité d'eau de clairçage. Cette quantité doit être proportionnelle au volume de sucre à clairçer.

Habituellement, les quantités d'eau et/ou de vapeur des clairçages sont fixes et réglées manuellement par l'ouverture de vannes pendant une durée prédéterminée manuellement (de l'ordre d'une dizaine de secondes pour l'injection d'eau).

Or en mesurant l'épaisseur de la couche de sucre sur des séries de cycles d'essorages successifs, on s'est aperçu que, bien qu'il s'agisse de la même masse cuite obtenue en continu, les quantités de sucre obtenues à chaque essorage varient de façon significative.

On a, par exemple, mesuré les épaisseurs suivantes sur une essoreuse de 1370 mm de diamètre : 96,9-112-114,04-106,25-107,45-105,65-106,25-105,65.

Les écarts obtenus justifient que l'on envisage d'ajuster les quantités d'eau et/ou de vapeur de clairçages à l'épaisseur de sucre à claircer, et ceci en automatique.

Ceci pourrait être fait par exemple de la façon suivante :

Si, pour une épaisseur "e", on désire une injection d'une durée "t", pour une épaisseur "e'", l'injection devra être d'une durée "t'" telle que :

$$t' = t \frac{e'}{e}$$

On se rend compte des intérêts et de l'avantage que représente le procédé de l'invention et les moyens pour sa mise en oeuvre dans la conduite d'une campagne sucrière.

## Revendications

1. Procédé de mesure de l'épaisseur d'un dépôt solide sur les parois d'une centrifugeuse, procédé caractérisé en ce qu'il consiste, au cours de la rotation du panier de la centrifugeuse, à appliquer, en permanence ou non à la surface de la couche de solides se déposant sur la paroi interne de ce panier en rotation, un palpeur monté à l'extrémité d'un bras disposé perpendiculairement à un arbre situé à l'intérieur du panier de la centrifugeuse dont la direction est parallèle à celle de l'axe de rotation dudit panier, à mesurer, en permanence ou non, la valeur de l'angle compris entre la position occupée par ledit bras à un moment ou une période donné(e) en cours de rotation et une position préalablement fixée comme position de référence et à déterminer l'épaisseur "e" de ladite couche de solides déposée.

2. Procédé selon la revendication 1, caractérisé en ce que l'épaisseur "e" de ladite couche de solides déposée, est déterminée suivant la relation :

$$e = R - \sqrt{b^2 + c^2 - 2bc \cos(\alpha + \alpha_0)}$$

où R est le rayon du cylindre-panier, $\underline{b}$ est la distance entre la position du palpeur et l'arbre auquel le bras portant ledit palpeur est relié, $\underline{c}$ est la distance entre l'axe longitudinal du cylindre-panier et ledit arbre qui lui est parallèle, et $\alpha_0$ est l'angle que fait le bras portant le palpeur dans sa position de référence avec la position qu'il aurait si sa direction coupait l'axe de rotation du panier.

3. Moyens pour la mise en oeuvre du procédé selon la revendication 1 ou 2, ces moyens étant essentiellement caractérisés par l'association d'un palpeur et d'un appareillage transmetteur de mesure d'angle, le palpeur comprenant un arbre (6) unique destiné à être monté à l'intérieur du cylindre-panier (1) de la centrifugeuse et parallèlement à l'axe de rotation de celui-ci et portant à l'une de ses extrémités, perpendiculairement à lui-même, un bras (10) se terminant par un système palpeur (9) et, à l'autre extrémité, des systèmes (8) propres à maintenir ledit palpeur au contact de la surface sur laquelle il doit s'appuyer ou à rappeler ledit système palpeur vers une position de référence fixe donnée ; ledit palpeur étant associé à au moins un système de détermination de la valeur de l'angle (7) compris entre ladite position de référence ($P_0$) et la position de travail (P) dudit système palpeur.

4. Moyens selon la revendication 3, caractérisés en ce que le système palpeur (9) est constitué par une surface courbe ne présentant aucune aspérité.

5. Moyens selon l'une des revendications 3 ou 4, caractérisés en ce que l'arbre (6) porteur du bras (10) et de son système palpeur (9) est pourvu à son extrémité supérieure faisant saillie à l'extérieur du couvercle (3) de la centrifugeuse, d'un système (7) de mesure de la valeur de l'angle formé éventuellement relié à un système calculateur chargé de résoudre automatiquement la relation de la revendication 2 et donnant, par affichage ou lecture directe, la valeur de l'épaisseur (e) recherchée.

6. Moyens selon l'une des revendications 3, 4 ou 5 permettant l'établissement du bilan matière d'une centrifugeuse discontinue ou le réglage automatique d'actions, séquentielles ou non, dépendant de l'épaisseur (e) mesurée à un instant donné ou pendant une période du cycle de la centrifugeuse.

## Claims

1. Method for measuring the thickness of a solid deposit on the walls of a centrifuge, characterised in that it consists in applying a sensor, continuously or otherwise during the rotation of the basket of the centrifuge, to the surface of the layer of solids deposited on the internal wall of this rotating basket, said sensor being mounted at the end of an arm arranged at right angles to a shaft located in the interior of the basket of the centrifuge in parallel with the axis of rotation of the said basket, in measuring, continuously or otherwise, the value of the included angle between the position occupied by the said arm at a given instant or over a given period of the rotation and a position fixed in advance as a reference position, and in determining the thickness "e" of the said layer of deposited solids.

2. Method according to claim 1, characterised in that the thickness "e" of the said layer of deposited solids is determined according to the equation

$$e = R\sqrt{- b^2 + c^2 - 2bc \cos (\alpha + \alpha_0)}$$

where R is the radius of the cylindrical basket, $\underline{b}$ is the distance between the position of the sensor and the shaft to which the arm carrying the said sensor is connected, $\underline{c}$ is the distance between the longitudinal axis of the cylindrical basket and the said shaft parallel therewith, and $\alpha_0$ is the angle between the arm carrying the sensor in its reference position and the position it would occupy if it intersected the axis of rotation of the basket.

3. Means for carrying out the method according to claim 1 or 2, essentially characterised by the interconnection of a sensor and an instrument transmitting the angle measurement, the sensor comprising a single shaft (6) adapted to be mounted in the interior of the cylindrical basket (1) of the centrifuge in parallel with the axis of rotation of the latter, and carrying at one of its ends at right angles thereto an arm (10) ending in a sensing system (9), and at the other end systems (8) for maintaining contact between the said sensor and the surface on which it is supposed to lie, or for returning the said sensing system to a given fixed reference position, the said sensor being associated with at least one system (7) for determining the value of the included angle between the said reference position ($P_0$) and the working position (P) of the said sensing system.

4. Means according to claim 3, characterised in that the sensing system (9) comprises a curved surface with no unevenness.

5. Means according to one of claims 3 and 4, characterised in that the shaft (6) carrying the arm (10) and its sensing system (9) is provided at its upper end projecting out at the exterior of the lid (3) of the centrifuge with a system (7) for measuring the value of the angle formed, which may be connected to a computing system for automatically solving the equation of claim 2 and providing the value of the thickness (e) in question by means of direct display or direct reading.

6. Means according to one of claims 3, 4 or 5 for establishing the material balance of a discontinuous centrifuge, or for the automatic control of actions, sequential or otherwise, depending on the thickness (e) measured at a given instant or over a period of the cycle of the centrifuge.

## Patentansprüche

1. Verfahren zur Messung der Dicke einer Feststoffablagerung an den Wänden einer Zentrifuge, **dadurch gekennzeichnet**, daß während der Rotation der Zentrifugentrommel kontinuierlich oder diskontinuierlich auf die Oberfläche der sich auf der Innenwand dieser in Rotation befindlichen Trommel absetzenden Feststoff-Schicht ein Meßfühler angelegt wird, der am Ende eines Arms angebracht ist, der rechtwinklig zu einer im Inneren der Zentrifugentrommel angeordneten, parallel zu deren Rotationsachse verlaufenden Welle angesetzt ist, daß kontinuierlich oder diskontinuierlich der Wert des Winkels gemessen wird, der zwischen der Stellung, die zu einem Zeitpunkt oder während eines Zeitabschnitts bei der Rotation von diesem Arm eingenommen wird, und einer im voraus als Bezugsstellung vorgegebenen Stellung des Armes eingeschlossen wird, und daß die Dicke "e" dieser abgesetzten Feststoff-Schicht bestimmt wird.

2. Verfahren nach Anspruch 1, dadurch gekennzeichnet, daß die Dicke "e" dieser abgesetzten Feststoff-Schicht bestimmt wird nach der Beziehung

$$e = R - \sqrt{b^2 + c^2 - 2bc \cos(\alpha + \alpha_0)},$$

wobei R der Radius der zylindrischen Trommel, b der Abstand zwischen der Lage des Meßfühlers und der Welle, an welcher der diesen Meßfühler tragende Arm befestigt ist, c der Abstand zwischen der Längsachse der zylindrischen Trommel und der zu ihr parallelen Welle sowie $\alpha_0$ der Winkel ist, den der den Meßfühler tragende Arm in seiner Bezugsstellung mit der Stellung einschließt, die er einnehmen würde, wenn seine Ausrichtung die Rotationsachse der Trommel schneiden würde.

3. Mittel zur Durchführung des Verfahrens nach Anspruch 1 oder 2, im wesentlichen gekennzeichnet durch die Zusammenfügung eines Meßfühlers und einer Winkelmessungs-Übertragungseinrichtung, wobei der Meßfühler eine einzige Welle (6) umfaßt, die im Inneren der zylindrischen Trommel (1) der Zentrifuge und parallel zu deren Rotationsachse angebracht ist sowie an dem einen ihrer Enden, im rechten Winkel zu sich selbst, einen in einem Meßfühlersystem (9) endenden Arm (10) und an ihrem anderen Ende Systeme (8) aufweist, die geeignet sind, den Meßfühler in Kontakt mit der Oberfläche, gegen die er sich anlegen soll, zu halten oder dieses Meßfühlersystem in Richtung auf eine feste, vorgegebene Bezugsstellung zurückzuholen, und wobei der Meßfühler an wenigstens ein System (7) zur Bestimmung des Wertes des zwischen dieser Bezugsstellung (P₀) und der Arbeitstellung (P) des Meßfühlersystems ausgebildeten Winkels (7) angeschlossen ist.

4. Mittel nach Anspruch 3, dadurch gekennzeichnet, daß das Meßfühlersystem (9) durch eine gekrümmte Fläche gebildet wird, die keine Unebenheit aufweist.

5. Mittel nach einem der Ansprüche 3 oder 4, dadurch gekennzeichnet, daß die den Arm (10) und sein Meßfühlersystem (9) tragende Welle (6) an ihrem oberen, nach der Außenseite des Deckels (3) der Zentrifuge herausragenden Ende ein Meßsystem (7) für den Wert des auftretenden Winkels aufweist, das gegebenenfalls an ein Rechenwerk zum automatischen Lösen der in Anspruch 2 angegebenen Beziehung angeschlossen ist und durch Anzeige oder direktes Ablesen den ermittelten Wert der Dicke (e) ausgibt.

6. Mittel nach einem der Ansprüche 3, 4 oder 5, welche die Erstellung einer Stoffbilanz bei einer diskontuierlichen Zentrifuge oder die automatische Steuerung aufeinander oder nicht-aufeinanderfolgender Vorgänge in Abhängigkeit von der gemessenen Dicke (e) zu einem bestimmten Augenblick oder während eines Zeitabschnitts des Zyklusses der Zentrifuge zulassen.

## Fig. 1

Fig. 2

Fig. 2a

## Fig. 3